# EUROPEAN PATENT APPLICATION

(11) **EP 3 704 994 A1**
(43) Date of publication of application: **09.09.2020**
(21) Application number: 20382154.1
(22) Date of filing: 03.03.2020
(51) Int. Cl.: A47C 27/00, A01K 1/035, A47C 17/34

(54) **MODULAR DOG BED**

(30) Priority: 08.03.2019 ES 201930375 U
(71) Applicant: Corcuera Ocharan, Arkaitz, 01003 Vitoria-Gasteiz (ES)
(72) Inventor: Corcuera Ocharan, Arkaitz, 01003 Vitoria-Gasteiz (ES)
(74) Representative: Isern Patentes y Marcas S.L.

(57) **Abstract**

A modular dog bed characterised in that it comprises at least two cushions (1) wherein each cushion (1) comprises sides (2) wherein joining means (3, 4) are located configured to enable the cushions (1) to be fastened together, removably joined through the sides (2) thereof.

## Description

### OBJECT OF THE INVENTION

The present invention falls within the technical field of accessories for pets. More specifically, a modular dog bed is proposed, which comprises a plurality of cushions, identical to each other, and configured to be removably joined. The user can place the cushions in the desired relative position, depending on the user's needs or tastes.

### BACKGROUND OF THE INVENTION

Pets occupy a very important place in today's society. Thus, a multitude of accessories and complements are known which are designed especially for the well-being of pets or to improve aesthetics or give treats to such pets.

Among pets, dogs stand out because they are the option chosen by many animal lovers who want company, who want to teach their children values related to nature and taking care of animals, etc. In this technical field focused on taking care of animals, and more specifically dogs, many products have been developed which enable them to be taken care of or improve their quality of life.

Ergonomic leashes are known, for example, which enable dogs to move freely without feeling strangled by the leash around their neck (leashes comprising a harness), poop collectors are known, feeders are known which control the amount of food they serve the dog, etc.

One of the essential accessories for pets, and more specifically for dogs, are the beds on which they rest and/or sleep. Generally, these beds have an oval configuration, with a base and a side wall, which extends from the base, and which delimits the space of the bed that the dog has to lie down. Other types of beds have a configuration similar to that of a small house, also closed on top and with a door-like opening through which the dog accesses the bed. The key to a good dog bed is to make it comfortable so that the dog will want to rest therein.

The most important technical problem of the dog beds in the state of the art is that they are formed by a single piece. So, when they break, even if it is only one area of the bed, the bed must be thrown out and a whole new bed must be bought.

Another disadvantage that these beds in the state of the art have is that when they are stained they must be washed whole. Furthermore, sometimes the size or shape of the bed makes it impossible to put it in the washing machine, making cleaning tasks more complicated and more expensive.

Additionally, since the beds are purchased as a single piece, the user must adapt to the design made in the factory, which may not fit their tastes. Also, if they get tired of always seeing the bed with the same pattern and the same shape, or if they are going to change the location and the conditions of the new environment are different, nothing of the structure of the bed can be changed and a new one must be bought.

### DESCRIPTION OF THE INVENTION

The present invention proposes a modular dog bed which comprises a plurality of cushions, all with the same configuration and which are removably joined together. Said cushions can have different patterns so that the user can adapt the bed to their aesthetic tastes or needs at any time.

The bed is formed by joining the cushions. If a user has a large amount of space to place the bed or has more than one dog, more cushions can be joined so that the bed has a larger size. If the available space is small and/or the user has only one dog, the bed can be formed by joining only two cushions.

Furthermore, the cushions are interchangeable since they all have the same configuration and joining means which enable the linking or separation thereof at all times. In this manner, if, for example, the dog breaks a portion of the bed, it is not necessary to buy a whole new bed, but it would be sufficient to replace the damaged cushion. This enables the users to save a large amount of money and further enables them to reduce the consumption of materials, for which reason it contributes to an improvement in the environment.

Also, when a portion of the bed becomes stained or acquires dampness or bad odours, it is sufficient to separate the corresponding cushion from the rest of the cushions and wash said cushion. This enables the user to wash the cushions in the washing machine, saving time and money with respect to the problems mentioned for the beds of the state of the art. Also, during the time when the cushion is being washed, the dog can continue using the rest of the bed (the other cushions which continue to form the bed). Thanks to this, no discomfort is produced for the dog nor are its habits changed, something which is essential for its well-being.

If the user wants to modify the aesthetic appearance of the bed, they can change the arrangement of the cushions with each other and/or buy additional cushions with other prints. Furthermore, the cushions can be rotated so that the pattern of one face or another face is seen, which makes the bed very versatile.

In an exemplary embodiment, the joining means are snap fasteners. More specifically, the male snap fasteners are arranged on at least one side of one of the cushions and female snap fasteners, complementary to the male ones, are placed on the at least one other side of the cushions. In this manner, when the sides with complementary joining means are facing each other, they join together to form the bed. In a preferred embodiment, the cushions are square and have joining means on all the sides thereof (on two of the sides, opposite from each other, one type of joining means and on the other two sides, complementary joining means). This embodiment provides maximum versatility.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings which, by way of illustration and not limitation, represent the following:
Figure 1 shows a perspective view of two cushions of the bed which will be joined together in order to form the bed.
Figure 2 shows a front view of a cushion of the bed.
Figure 3 shows a front view of four cushions of the bed wherein the joining means have been marked.
Figure 4 shows a side view of two cushions of the bed joined together.
Figures 5A-B show views of an assembled dog bed of the invention, with the cushions joined together (figure 5A), and with the cushions separated (figure 5B).

### PREFERRED EMBODIMENT OF THE INVENTION

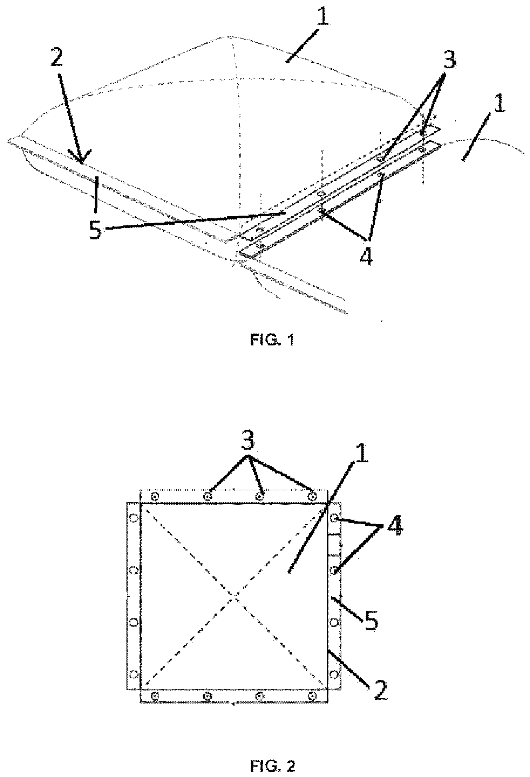

A few exemplary embodiments of the present invention are described below with help from figures 1 to 5.

The proposed modular dog bed comprises at least two cushions (1), as seen in figure 1, wherein two cushions have been depicted which will be joined in order to form the bed. Each cushion (1) comprises sides (2) wherein joining means (3, 4) are located configured to enable the cushions (1) to be fastened together. In the bed, the cushions (1) are removably joined through the sides (2) thereof. This enables the cushions (1) to be placed in different positions relative to each other and to be exchanged for other necessary cushions (1). Furthermore, the bed can have more or less cushions (1) depending on the space available, the tastes of the user or the number of dogs that will rest/sleep therein.

In an exemplary embodiment, the cushions (1) have a polygonal configuration and preferably the cushions (1) have a square configuration, as shown in figure 2. Also preferably, the joining means (3, 4) are snap fastenings.

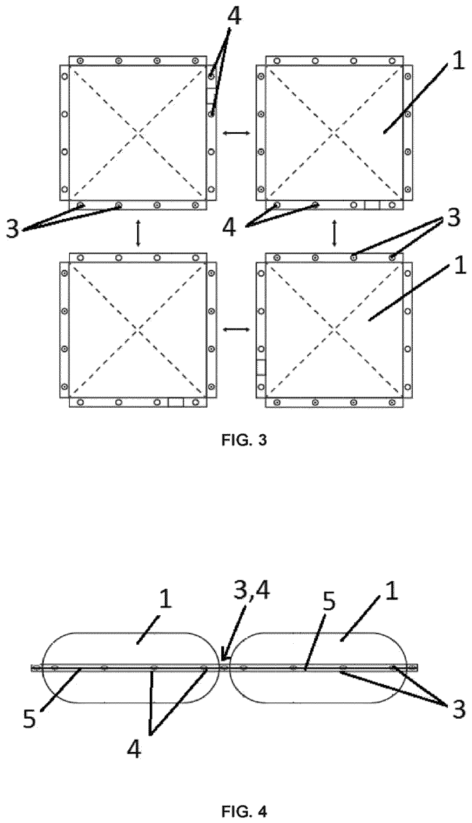

Figure 3 shows an embodiment wherein there are four cushions (1) which, when joined, form a bed. The joining means (3, 4) are, in this case, first joining means (3) and second joining means (4) and are complementary to each other. Each cushion (1) comprises, at least on one side (2), first joining means (3) and on the other side (2), second joining means (4), such that first joining means (3) of one cushion (1) are joined to second joining means (4) of another cushion (1). In the mentioned figure 3, it can be seen how the joining means (3, 4) which are complementary to each other are arranged facing each other.

More preferably, in this embodiment the first joining means (3) are arranged on opposite sides (2) of each cushion (1) and the second joining means (4) are arranged on the other sides (2) of the cushion (1).

In the figures it can also be seen how the cushions (1) can comprise extensions (5), along the sides (2), wherein the joining means (3, 4) are arranged. In an exemplary embodiment, said extensions (5) are sewn to the cushion (1). Figure 4 shows two cushions (1) joined together by the corresponding joining means (3, 4) thereof. The extensions (5) of the cushions (1) can also be seen, which facilitate the placement of the joining means (3, 4) and the joining of the cushions (1).

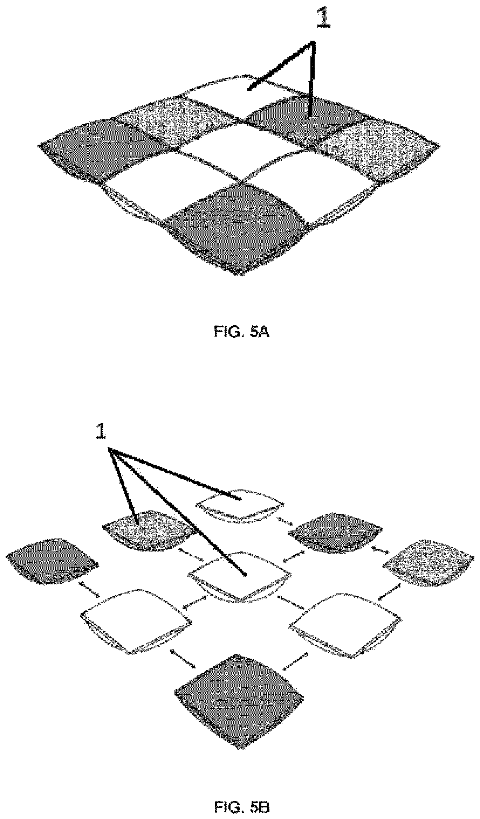

Figure 5A shows a modular dog bed formed by the joining of several cushions (1). Figure 5B shows the cushions (1) of the bed shown in Figure 5A separated from each other. As seen in this figure, the cushions (1) can be connected to each other in any of the directions of the arrows. Furthermore, the positions can be exchanged with each other or more or less cushions (1) can be placed depending on the needs and/or tastes of the users.

## Claims

1. A modular dog bed **characterised in that** it comprises at least two cushions (1) wherein each cushion (1) comprises sides (2) wherein joining means (3, 4) are located configured to enable the cushions (1) to be fastened together, removably joined through the sides (2) thereof.

2. The modular dog bed according to claim 1 **characterised in that** the cushions (1) have a polygonal configuration.

3. The modular dog bed according to claim 1 **characterised in that** the cushions (1) have a square configuration.

4. The modular dog bed according to claim 1 **characterised in that** the joining means (3, 4) are snap fittings.

5. The modular dog bed according to any one of the preceding claims **characterised in that** the joining means are first joining means (3) and second joining means (4) and are complementary to each other, and each cushion (1) comprises, at least on one side (2), first joining means (3) and on the other side (2), second joining means (4), such that first joining means (3) of one cushion (1) are joined to second joining means (4) of another cushion (1).

6. The modular dog bed according to any one of the preceding claims **characterised in that** it comprises four cushions (1).

7. The modular dog bed according to claims 3 and 5 **characterised in that** the first joining means (3) are arranged on opposite sides (2) of each cushion (1) and the second joining means (4) are arranged on the other sides (2) of the cushion (1).

8. The modular dog bed according to any one of the preceding claims **characterised in that** the cushions (1) comprise extensions (5), along the sides (2), wherein the joining means (3, 4) are arranged.

9. The modular dog bed according to claim 8 **characterised in that** the extensions (5) are sewn to the cushion (1).
